# EUROPÄISCHE PATENTSCHRIFT

(11) **EP 0 666 621 B1**
(45) Veröffentlichungstag und Bekanntmachung des Hinweises auf die Patenterteilung: **05.04.2000**
(21) Anmeldenummer: 95101270.7
(22) Anmeldetag: 31.01.1995
(51) Int. Cl.: H01R 25/14

(54) **Als Stromschiene ausgebildeter Leuchtenträger**
Lamp support designed as a rail
Support de lampe développé en tant que rail

(30) Priorität: 03.02.1994 DE 9401729 U
(43) Veröffentlichungstag der Anmeldung: 09.08.1995
(73) Patentinhaber: Elkamet Kunststofftechnik GmbH, 35216 Biedenkopf (DE)
(72) Erfinder: Flammer, Eberhard, D-35216 Biedenkopf (DE); Halemeier,Eckhard, D-32120 Hiddenhausen (DE); Zimmermann,Wolfram, D-35075 Gladenbach (DE)
(74) Vertreter: Olbricht, Karl Heinrich, Dipl.-Phys.

(56) Entgegenhaltungen:
- EP-A- 0 215 753
- GB-A- 1 566 158
- GB-A- 2 053 591
- US-A- 4 105 099

## Beschreibung

Die Erfindung betrifft einen als Stromschiene ausgebildeten Leuchtenträger in Form eines an einer Raumdecke oder anderen tragfähigen Montagefläche befestigbaren Profils zur beliebig plazierten Installierung einer Mehrzahl von mit je einem Adapter ausgestatteten Leuchten,
- wobei der Profilkörper als aus Kunststoff stranggepreßtes Profil in Form einer an ihrer der Montagefläche abgekehrten Stelle offenen, doppelwandigen Rinne ausgebildet ist,
- wobei der Profilkörper einen Eingreifraum zur Aufnahme von Verankerungselementen der Adapter und zur stirnseitigen Aufnahme von axialen Stromanschluß- und Verbindungselementen aufweist,
- wobei an den Profilwänden im Bereich des Eingreifraums als Stromleitung dienende Metalldrähte elektrisch isoliert angeordnet sind,
- wobei die als Stromleitung dienenden Metalldrähte und ein die Erdleitung bildender Metalldraht unter Freilassung von sich über die ganze Profillänge erstreckenden Kontaktflächen in die Innenwände und/oder Außenwände eingebettet sind,
- wobei der die Erdleitung bildende Metalldraht im äußeren Wandbereich des mittigen Eingreifraumes in die Profilwand eingebettet ist,
- wobei zwischen den Innenwänden und den Außenwänden des Profilkörpers durch Querwände abgegrenzte kanalartige Hohlräume gebildet sind, und
- wobei die von den Innenwänden begrenzte Rinne einen Rastflächen für die Verriegelungselemente der Adapter ergebende Hinterschneidungen aufweisenden Eingreifraum für die Aufnahme der Adapter bildet.

GB-A-1 566 158 (D1) beschreibt einen solchen Leuchtenträger in Form einer Stromschiene mit einem aus Kunststoff stranggepreßten Profilkörper in Form einer doppelwandigen, einseitig offenen Rinne. Diese hat einen Eingreifraum zur Festlegung von Leuchten-Adaptern, wobei an den Profilwänden im Bereich des Eingreifraums zwei als Stromleitung dienende Metalldrähte elektrisch isoliert angeordnet sind. Nachteilig hierbei ist, daß hierbei stets nur eine bestimmte Adapterbauform verwendet werden kann. Sie muß mit den in dem Profilkörper integrierten Stromleitern korrespondierende Kontakte aufweisen und für die in der Stromschiene eingespeiste Versorgungsspannung ausgelegt sein. Andere Adapter können nicht benutzt werden, so daß bei einer Veränderung einer Raumbeleuchtung bzw. einem Wechsel der meist mit einem Adapter versehenen Leuchten unter Umständen das komplette Schienensystem ausgetauscht werden muß. Das ist nicht nur arbeits- und zeitaufwendig, sondern zudem mit erheblichen Kosten verbunden. Auch besteht keine Möglichkeit, Leuchten mit unterschiedlicher Spannungsaufnahme an einer gemeinsamen Schiene zu kombinieren, was die Flexibilität und den Gebrauch der Stromschiene stark einschränkt.

Leuchtenträger mit diesen Merkmalen finden aber Anwendung in Räumen mit hohen Beleuchtungsansprüchen wie Arbeitsstätten, Museen, Leseräumen, Verkaufsräumen usw., um mit verhältnismäßig geringem Installationsaufwand eine Vielzahl von Leuchten optimal plaziert zu installieren und die Räume gut auszuleuchten. Die benötigten Profile werden an einer Raumdecke oder einer anderen tragfähigen Montagefläche befestigt. Die in den Profilen befindlichen Metalldrähte werden durch stirnseitige Anschlußelemente mit einer Stromleitung in Verbindung gebracht. An der zur Installation einer Leuchte vorgesehenen Stelle wird deren Adapter mit dem Leuchtenträger so verbunden, daß dessen Stromkontaktelemente mit den stromleitenden Drähten des Leuchtenträgers in Kontakt gebracht und zugleich Verankerungselemente des Adapters in Eingriff mit den Hinterschneidungen der Eingreifräume des Leuchtenträgers gebracht werden.

Ein bekannter einfacher Leuchtenträger, dessen Profilkörper als stranggepreßtes Kunststoffprofil ausgebildet ist und der in einem Arbeitsgang hergestellt werden kann, hat den Nachteil, daß er wegen der Stromkontakte nur jeweils eine ganz bestimmte Bauform von Adaptern aufnehmen kann, die es in ganz verschiedenen Gestaltungen gibt. Ungünstig ist auch, daß diese Stromschienen unmittelbar an der Montagefläche mittels Schrauben befestigt werden, die den Profilkörper durchdringen. Das erschwert die Montage und macht insbesondere ein Auswechseln der Leuchtenträger gegen solche, die für eine andere Adapter-Bauform geeignet sind, zu einer arbeitsaufwendigen Prozedur.

Es sind ferner als Stromschienen ausgebildete Leuchtenträger bekannt geworden, die durch Mehrfachanordnung der Metalldrähte für die Stromleitung auch für Adapter mit unterschiedlicher Anordnung der Stromkontakte geeignet sind. Sie bestehen aus einem an einer Seite mit einem breiten Schlitz versehenen vierkantigen Metallprofil, in dem durch Kunststoffeinlagen isoliert die Metalldrähte für die Stromleitungen angeordnet sind. Damit ist der Nachteil verbunden, daß zu ihrer Herstellung mehrere Arbeitsgänge in verschiedenen Produktionsstätten erforderlich sind. Dadurch sind sie verhältnismäßig teuer.

Die beiden letztgenannten Stromschienen sind so gestaltet, daß die Adapter der Leuchten jeweils an ihrem Kopfende vom Leuchtenträger übergriffen werden. Das setzt voraus, daß dieser einen verhältnismäßig breiten Eingreifraum und somit einen großen Profilquerschnitt hat; sonst müßten die Adapter in ihrem Kontakt- und Verriegelungsbereich so feingliedrig ausgebildet sein, daß ihre Belastbarkeit und Sicherheit mangelhaft wäre.

Ein Stecksystem gemäß GB-A-2 053 591 besitzt eine Stromschiene mit zwei Stromleitern sowie gegebenenfalls einer zusätzlichen Masseleitung. Die Leiter sind als im Querschnitt federförmig gebogene Federstahl-Leisten ausgebildet und müssen nach der Fertigung des Kunststoffprofils in darin vorgesehene, zur Profilachse hin offene Kanäle eingesteckt werden. Dies erfordert mehrere, zum Teil sehr aufwendige Arbeitsgänge, die nicht nur zeit-, sondern auch kostenintensiv sind. Die Verwendung verschiedener Adapter ist nicht möglich und ebensowenig vorgesehen wie das Anbringen von Zierleisten oder Informationsträgem. Die seitlich in den einwandigen Profilkörper eingebrachten Klemmnuten dienen lediglich zur Festlegung der Stromschiene an einer Decke oder Montagefläche mittels Klemmhaltern. Zierleisten, Informationsträger o.dgl. sind nicht vorgesehen.

Gleiches gilt für einen aus EP-A-0 215 753 bekannten Leuchtenträger, der ein äußeres, im Querschnitt kreisrundes Mantelprofil hat, das zwei durch einen waagrechten Steg voneinander getrennte Kanäle aufweist. Ein kleinerer Kanal dient der Aufnahme von Eingriffsmitteln zur Festlegung des Leuchtenträgers an einer Montagefläche, während ein größerer Kanal ein inneres Trägerprofil aufnimmt, das die mit je einem Adapter ausgebildeten Leuchten haltert und ein aus Kunststoff stranggepreßtes Profil mit einem nach unten offenen, asymmetrisch ausgebildeten Eingreifraum ist. Dieser hat seitlich zwei einander gegenüberliegende Hinterschneidungen zur Aufnahme von Verriegelungselementen sowie zwei weitere einander gegenüberliegende Hinterschneidungen, in deren Endbereichen je ein Metalldraht eingesetzt ist. Leuchten mit unterschiedlichem Adapter und Spannungsbedarf können weder montiert noch irgendwie eingesetzt werden. Der gesamte Aufbau ist aufwendig und teuer. Die Herstellung der Stromschienen aufgrund der zahlreichen Arbeitsgänge überaus unwirtschaftlich.

Ein Leuchtenträger laut US-A-4 105 099 bildet ebenfalls eine aus mehreren Teil-Profilen aufwendig zusammengesetzte Schiene mit drei nebeneinander angeordneten Stromleitern in Form von Klemmschlitzprofilen. Auch diese Konstruktion ist in der Herstellung sehr teuer. Durch die Anordnung der Stromleiter in drei nebeneinander liegenden Kanälen ist ein solcher Leuchtenträger wiederum nur für den Einsatz ganz bestimmter Adapter geeignet, die zudem ausschließlich über die in den Stromleitern wirkenden Klemmkräfte gehalten werden.

Die Aufgabe der Erfindung wird darin gesehen, einen als Stromschiene ausgebildeten Leuchtenträger zu schaffen, der kostengünstig und rationell herstellbar sowie für Adapter verschiedener Bauart geeignet ist. Die Stromschiene soll leicht zu handhaben sein.

Diese Aufgabe wird gemäß den kennzeichnenden Teil von Anspruch 1 angegebenen Merkmalen dadurch gelöst,
a) daß in die den mittigen Eingreifraum begrenzenden Innenwände des in einem Arbeitsgang hergestellten Profilkörpers vier, jeweils paarweise einander gegenüberliegend, seitlich ausgedehnte Hinterschneidungen eingeformt sind, in deren Endbereichen die Stromleitung bildende Metalldrähte unter Freilassung von über die ganze Profillänge sich erstreckenden Kontaktflächen in die Profilwände eingebettet sind, und
b) daß in die Außenwände des Profilkörpers an beiden Seiten je wenigstens eine Eingreifnut eingeformt ist.

Eine derartige Stromschiene kann Adapter unterschiedlicher Bauart sowie unterschiedlicher Spannung aufnehmen, ohne daß irgendwelche Veränderungen oder Anpassungen vorgenommen werden müssen. Vielmehr lassen sich Leuchten mit unterschiedlichen Adaptern und Spannungen sogar an einer einzigen, gemeinsamen Schiene montieren. Die in die Außenwände des Profilkörpers an beiden Seiten eingeformten Eingreifnuten ermöglichen darüber hinaus das Anbringen von Zierleisten, Informationsträgern o.dgl.

Alternative Detaillösungsvorschläge gehen aus den Ansprüchen 2 bis 4 hervor.

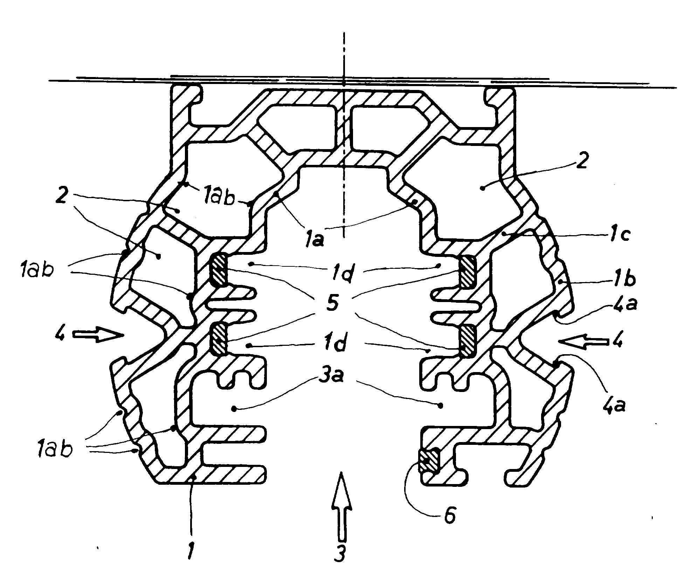

Ein Ausführungsbeispiel der Erfindung wird im folgenden näher erläutert. Die einzige Figure zeigt einen Querschnitt durch einen als Stromschiene ausgebildeten Leuchtenträger mit mehreren Stromleitungen,

Der erfindungsgemäße Leuchtenträger ist als Stromschiene in Form eines an einer Raumdecke oder sonstigen tragfähigen Montagefläche befestigbaren Profils zur beliebig plazierten Installierung einer Mehrzahl von mit je einem Adapter ausgestatteten Leuchten ausgebildet. Der Profilkörper 1 besteht aus einem stranggepreßten Kunststoffprofil in Form einer an ihrer der Montagefläche abgekehrten Seite offenen, doppelwandigen Rinne. Zwischen der Innenwand 1a und der Außenwand 1b des Profilkörpers 1 sind durch Querwände 1c kanalartige Hohlräume 2 gebildet. Die von der Innenwand 1a begrenzte Rinne bildet einen Eingreifraum 3, der zur Aufnahme der an den Leuchtenhalterungen befindlichen Adapter dient. Dessen Wände sind mit Hinterschneidungen 3a zur Aufnahme von Verriegelungselementen der Adapter versehen.

An den Außenwänden 1b des Profilkörpers 1 ist je eine seitliche Eingreifnut 4 vorgesehen. Diese kann Hinterschneidungen 4a zur Halterung von unter Federwirkung einklemmbaren Zierleisten, Informationsträgem oder dergleichen Leisten aufweisen. Dabei hat die den mittigen Eingreifraum 3 begrenzende Innenwand 1a mehrere, je paarweise einander gegenüberliegende, seitlich ausgedehnte Hinterschneidungen 1d. In deren inneren Endbereichen ist jeweils unter Freilassung von über die ganze Profillänge durchgehenden Kontaktflächen je ein der Stromleitung dienender Metalldraht 5 in die Profilwand eingebettet. Die Hinterschneidungen 1d sind so tief, daß die darin angeordneten Metalldrähte 5 nicht mit an dem Leuchtenträger hantierenden Fingern oder den üblichen Werkzeugen bei normalem Gebrauch berührt werden können. im Eingangsbereich des Eingreifraums 3 ist innen in eine Seitenwand des Profilkörpers 1 ein weiterer, die Erdleitung bildender Metalldraht 6 eingebettet. Damit enthält dieser Leuchtenträger mehr zur Stromleitung geeignete Drähte 5 und 6, als für die vorschriftsmäßige Stromversorgung einer Leuchte notwendig sind. Das schafft die Möglichkeit, über verschiedene Adapter mit verschieden plazierten Stromkontaktelementen den Strom zuzuleiten. Femer kann man den Leuchtenträger gleichzeitig mit verschiedenen elektrischen Spannungen versorgen. Der Leuchtenträger kann mittels den Profilkörper 1 auf der Scheitellinie durchdringender Schrauben unmittelbar an der Montagefläche befestigt werden.

Bei der dargestellten Bauform werden die Adapter innerhalb des mittigen Eingreifraumes 3 gehalten.

Bei der dargestellten Ausführungsform des Profilkörpers 1 können jeweils wenigstens zwei der zwischen den Profilwänden befindlichen kanalartigen Hohlräume 2 zur Aufnahme von separaten Kabeln 9 wie z. B. Antennenkabel, Telefonleitung, Stromleitung mit anderer Spannung u. dgl. dienen.

Die Erfindung ist nicht auf der vorbeschriebenen Ausführungsform beschränkt. Es ist deutlich, welche Vielfalt bei der Gestaltung des Profilkörpers 1 hinsichtlich Montage des Leuchtenträgers, Aufnehmbarkeit verschiedener Adapter, Anbringbarkeit zusätzlicher Bauteile und anderes ohne nennenswerten Kostenunterschied möglich ist.

## Patentansprüche

1. Als Stromschiene ausgebildeter Leuchtenträger in Form eines an einer Raumdecke oder einer anderen tragfähigen Montagefläche befestigbaren Profils zur beliebig plazierten Installierung einer Mehrzahl von mit je einem Adapter ausgestatteten Leuchten,
- wobei der Profilkörper (1) als aus Kunststoff stranggepreßtes Profil in Form einer an ihrer der Montagefläche abgekehrten Stelle offenen, doppelwandigen Rinne ausgebildet ist,
- wobei der Profilkörper (1) einen Eingreifraum (3) zur Aufnahme von Verankerungselementen der Adapter und zur stirnseitigen Aufnahme von axialen Stromanschluß- und Verbindungselementen aufweist,
- wobei an den Profilwänden im Bereich des Eingreifraums (3) als Stromleitung dienende Metalldrähte (5, 6) elektrisch isoliert angeordnet sind,
- wobei die als Stromleitung dienenden Metalldrähte (5) und ein die Erdleitung bildender Metalldraht (6) unter Freilassung von sich über die ganze Profillänge erstreckenden Kontaktflächen in die Innenwände (1a) und/oder Außenwände (1b) eingebettet sind,
- wobei der die Erdleitung bildende Metalldraht (6) im äußeren Wandbereich des mittigen Eingreifraumes (3) in die Profilwand eingebettet ist,
- wobei zwischen den Innenwänden (1a) und den Außenwänden (1b) des Profilkörpers (1) durch Querwände (1c) abgegrenzte kanalartige Hohlräume (2) gebildet sind, und
- wobei die von den Innenwänden (1a) begrenzte Rinne einen Rastflächen für die Verriegelungselemente der Adapter ergebende Hinterschneidungen (3a) aufweisenden Eingreifraum (3) für die Aufnahme der Adapter bildet,
**dadurch gekennzeichnet,**
a) daß in die den mittigen Eingreifraum (3) begrenzenden Innenwände (1a) des in einem Arbeitsgang hergestellten Profilkörpers (1) vier, jeweils paarweise einander gegenüberliegend, seitlich ausgedehnte Hinterschneidungen (1d) eingeformt sind, in deren Endbereichen die Stromleitung bildende Metalldrähte (5) unter Freilassung von über die ganze Profillänge sich erstreckenden Kontaktflächen in die Profilwände eingebettet sind, und
b) daß in die Außenwände (1b) des Profilkörpers (1) an beiden Seiten je wenigstens eine Eingreifnut (4) eingeformt ist.

2. Leuchtenträger nach Anspruch 1, **dadurch gekennzeichnet,** daß die Außenwände (1b) des Profilkörpers (1) Hinterschneidungen (4a) zur Halterung von unter Federwirkung anklemmbaren Zierleisten, Informationsträgem o.dgl. Leisten in Form von Klemmprofilen aufweisen.

3. Leuchtenträger nach Anspruch 1 oder 2, **dadurch gekennzeichnet,** daß die zwischen den Profilwänden (1a, 1b) befindlichen kanalartigen Hohlräume (2) im Querschnitt unrund sind, wobei die Dicke der Pofilwände einschließlich der Zwischenwände (1c) in allen Profilbereichen wenigstens annähernd gleich ist.

4. Leuchtenträger nach einem der Ansprüche 1 bis 3, **dadurch gekennzeichnet,** daß wenigstens einer der zwischen den Profilwänden (1a,1b) befindlichen kanalartigen Hohlräume (2) einen Aufnahmeraum für ein weiteres Leitungskabel (9) bildet.

## Claims

1. Lamp support designed as a rail in the form of a section attachable to a room ceiling or another load-bearing mounting surface for installation of several lamps provided each with an adapter at any place,
• the sectional body (1) consisting of an extruded plastic section in the shape of a double-walled channel open on the side opposite the mounting surface,
• the sectional body (1) having an engagement space (3) for holding anchoring elements of the adapters and for face-mounting axial power-supply and connecting elements,
• metal wires (5, 6) that serve as conductors being arranged electrically insulated on the section walls in the zone of the engagement space (3),
• the metal wires (5) that serve as conductors and a metal wire (6) that forms the earthing conductor being embedded in the inner walls (1a) and/or outer walls (1b), leaving blank contact surfaces which extend over the complete section length,
• the metal wire (6) that forms the earthing conductor being embedded in the section wall in the outer wall area of the central engagement space (3),
• channel-like hollow spaces (2) divided by partitions (1c) being formed between the inner walls (1a) and the outer walls (1b) of the sectional body, and
• the channel limited by the inner walls (1a) forming an engagement space (3) for holding the adapters, which space has undercuts (3a) which form engagement surfaces for the locking elements of the adapters,
**wherein**
(a) four laterally extended undercuts (1d) arranged in opposite pairs are shaped into the inner walls (1a) limiting the central engagement space (3) of the sectional body (1) that is manufactured in a single operation, in the end zones of which undercuts metal wires (5) forming the conductors are embedded, leaving blank contact surfaces that extend over the complete section length, and
(b) at least one engagement groove (4) is shaped into the outer walls (1b) of the sectional body (1) on either side.

2. Lamp support according to claim 1, **wherein** the outer walls (1b) of the sectional body (1) include undercuts (4a) for holding trim strips, information carriers or the like by way of clamping sections to be attached under spring action.

3. Lamp support according to claim 1 or claim 2, **wherein** the channel-like hollow spaces (2) located between the section walls (1a, 1b) have a non-circular cross sections, with the thickness of the section walls including the partitions (1c) being at least approximately the same in all areas of the section.

4. Lamp support according to any one of claims 1 to 3, **wherein** at least one of the channel-like hollow spaces (2) located between the sections walls (1a, 1b) forms a receiving space for another conductor (9).

## Revendications

1. Support de lampe développé en tant que rail, en forme d'un profilé pouvant être fixé au plafond d'une pièce ou à tout autre surface de montage capable de supporter une charge, pour l'installation de plusieurs lampes équipées d'un raccord respectif et placées en des endroits quelconques,
* le profilé (1) étant conçu en tant que profilé en matière plastique extrudée ayant la forme d'un canal à double paroi, ouvert sur son côté opposé de la surface de montage,
* le profilé (1) comportant un espace d'insertion (3) pour recevoir des éléments d'ancrage des raccords et pour recevoir sur le côté frontal des éléments axiaux de raccordement et de connexion électrique,
* des fils métalliques (5, 6) servant de conduites électriques étant isolés électriquement et agencés sur les parois du profilé, dans la zone de l'espace d'insertion (3),
* les fils métalliques (5) servant de conduites électriques et un fil métallique (6) servant à la mise à la terre étant logés dans les parois intérieures (1a) et/ou extérieures (1b), en laissant libre des surfaces de contact s'étendant sur toute la longueur du profilé,
* le fil métallique (6) servant à la mise à la terre étant logé dans la paroi du profilé, dans la zone de paroi extérieure de l'espace d'insertion central (3),
* des espaces vides (2) en forme de canaux délimités par des parois transversales (1c) étant formés entre les parois intérieures (1a) et les parois extérieures (1b) du profilé (1), et
* le canal délimité par les parois intérieures (1a) formant un espace d'insertion (3) destiné à recevoir le raccord et comportant des contre-dépouilles (3a) produisant des surfaces d'enclenchement pour les éléments de verrouillage du raccord.
**caractérisé**
a) en ce que quatre contre-dépouilles (1d), situées par paires l'une en face de l'autre et s'étendant latéralement, sont moulées dans les parois intérieures (1a) limitant l'espace d'insertion central (3) du profilé (1) fabriqué en une seule opération de travail, des fils métalliques (5) servant de conduites électriques étant logés dans les parois du profilé dans les zones terminales des contre-dépouilles, en laissant libres des surfaces de contact s'étendant sur toute la longueur du profilé, et
b) en ce qu'au moins une rainure d'insertion (4) respective est moulée dans les parois extérieures (1b), sur les deux côtés du profilé (1).

2. Support de lampe selon la revendication 1, **caractérisé** en ce que les parois extérieures (1b) du profilé (1) comportent des contre-dépouilles (4a) pour maintenir des baguettes décoratives, des supports d'informations ou d'autres baguettes en forme de profilés de serrage, qui sous l'action d'un ressort peuvent être fixés par serrage.

3. Support de lampe selon la revendication 1 ou 2, **caractérisé** en ce que les espaces vides (2) se trouvant entre les parois (1a, 1b) du profilé et ressemblant à des canaux sont ovalisés en coupe transversale, l'épaisseur des parois du profilé, y-compris des parois transversales, étant au moins à peu près identique dans toutes les zones du profilé.

4. Support de lampe selon l'une des revendications 1 à 3, **caractérisé** en ce qu'au moins un des espaces vides (2) ressemblant à des canaux et se trouvant entre les parois (1a, 1b) du profilé forme un espace de réception pour un autre câble électrique (9).
